# EUROPEAN PATENT SPECIFICATION

(11) **EP 4 439 594 B1**
(45) Date of publication and mention of the grant of the patent: **29.04.2026**
(21) Application number: 22913946.4
(22) Date of filing: 28.11.2022
(51) Int. Cl.: H01F 1/057, H01F 41/02

(54) **NEODYMIUM-IRON-BORON MAGNET AS WELL AS PREPARATION METHOD THEREFOR AND USE THEREOF**
NEODYM-EISEN-BOR-MAGNET SOWIE HERSTELLUNGSVERFAHREN DAFÜR UND VERWENDUNG DAVON
AIMANT NÉODYME-FER-BORE AINSI QUE SON PROCÉDÉ DE PRÉPARATION ET SON UTILISATION

(30) Priority: 27.12.2021 CN 202111616641
(43) Date of publication of application: 02.10.2024
(73) Proprietor: Yantai Zhenghai Magnetic Material Co., Ltd., Yantai Shandong 264006 (CN)
(72) Inventor: YU, Yongjiang, Yantai, Shandong 264006 (CN); LIU, Lei, Yantai, Shandong 264006 (CN); AN, Zhongxin, Yantai, Shandong 264006 (CN); FANG, Xiaoguang, Yantai, Shandong 264006 (CN); GENG, Guoqiang, Yantai, Shandong 264006 (CN)
(74) Representative: Gille Hrabal Partnerschaftsgesellschaft mbB Patentanwälte
(86) International application number: PCT/CN2022/134600
(87) International publication number: WO 2023/124688

(56) References cited:
- CN-A- 102 693 812
- CN-A- 102 693 812
- CN-A- 103 282 976
- CN-A- 107 369 512
- CN-A- 107 424 701
- CN-A- 109 585 112
- CN-A- 110 571 007
- CN-A- 114 284 018
- JP-A- 2017 011 086
- US-A1- 2013 092 868

## Description

The present application claims priority to the prior application with the patent application No. 202111616641.6, entitled "NEODYMIUM-IRON-BORON MAGNET AS WELL AS PREPARATION METHOD THEREFOR AND USE THEREOF" and filed with the China National Intellectual Property Administration on December 27, 2021.

### TECHNICAL FIELD

The present disclosure belongs to the field of neodymium-iron-boron magnets and particularly relates to a sintered neodymium-iron-boron magnet, a preparation method therefor, and use thereof.

### BACKGROUND

Sintered neodymium-iron-boron permanent magnet materials are currently the most widely applied permanent magnet functional materials with the highest overall magnetic performance, often referred to as the contemporary "king of magnets". They are crucial support materials that facilitate the development of energy, information, and other related fields. Since the advent of sintered neodymium-iron-boron magnets in the 1980s, they have been widely utilized in various fields, including the automotive industry, medical equipment, electronic information, aerospace, etc., due to their excellent magnetic performance and high cost-effectiveness. They have become a crucial support for the advancement towards smarter, smaller, and lighter technologies in related fields. In recent years, as the performance of sintered neodymium-iron-boron magnets has continuously improved, their application areas have also continuously expanded.

To ensure stable magnetic field output under high-temperature operating conditions, sintered neodymium-iron-boron permanent magnet materials need to possess high coercivity performance. Traditionally, heavy rare earth Dy/Tb starting materials are often added during the smelting procedure to improve the coercivity of magnets. However, the limited availability and high prices of heavy rare earth resources make their extensive use unsustainable and significantly increase the production costs of magnets. Furthermore, the addition of heavy rare earth metals can reduce the remanence of magnets, thereby decreasing the magnetic field strength that the magnets provide in space, which is detrimental to the miniaturization and lightweighting of related devices.

To improve the performance of magnets and reduce the usage of heavy rare earth elements such as terbium, dysprosium, etc., dual-alloy technology, grain refinement technology, and grain boundary diffusion technology have gained industry attention. Currently, the most widely applied are grain refinement technology and grain boundary diffusion technology. Grain refinement technology involves controlling the process parameters for the smelting and powder preparation procedures to achieve relatively small jet milling granularity and matching a corresponding sintering scheme, ultimately leading to fine control of the granularity of magnets. This reduces grain defects inside magnets and improves the coercivity of magnets.

Grain boundary diffusion technology involves coating the magnet's surface with a layer containing terbium and dysprosium element diffusion sources through methods such as dipping, spray coating, etc. The elements terbium and dysprosium diffuse into the magnet through the grain boundary phase, substituting for Nd in neodymium-rich phases in the grain boundaries to form (Dy/Tb)₂Fe₁₄B around the main phase grains, thereby increasing the anisotropy at the grain boundaries and improving coercivity.

Grain refinement technology and grain boundary diffusion technology can be used independently or in combination. When they are used in combination, grain refinement technology lays the foundation for the magnet's final performance. When grain refinement technology is used, the granularity of the magnet is small. With finer grains, the surface area of the main phase grains increases, enhancing surface energy and activity. This not only makes it more difficult to eliminate the adsorption of the impurity elements C, S, O, and N, which degrade performance, but also easily leads to abnormal grain growth, further deteriorating magnetic performance. Abnormal grain growth within the magnet can also significantly reduce the effectiveness of grain boundary diffusion.

Patent CN106252012A provides a segmented sintering method for preventing abnormal grain growth. The method involves incubating at a temperature 20 °C lower than the sintering temperature of neodymium-iron-boron magnets for 0-1 h, then increasing the temperature to the sintering temperature and incubating for 3-6 h, naturally cooling to a temperature between 700 °C and 800 °C, and then heating again to a temperature 0-20 °C higher than the sintering temperature and incubating for 5-8 h. This process results in magnets with fine grains and uniform density, thereby achieving high-performance neodymium-iron-boron magnets low in heavy rare earth content. Despite the segmented sintering process described above, high sintering temperatures and long segment incubation times under small granularity conditions still pose risks of abnormal grain growth, and the overall sintering period is long, leading to low efficiency in mass production.

CN 102 693 812 A and US 2013/092868 A1 disclose neodymium-iron-boron permanent magnets, and CN 110 571 007 A discloses using two sintering stages in manufacturing neodymium-iron-boron permanent magnets.

### SUMMARY

To alleviate the technical problems described above, the present disclosure provides a high-performance neodymium-iron-boron magnet, wherein the magnet comprises main phase grains having an R₂(Fe,M)₁₄B structure and comprises a grain boundary phase; the grain boundary phase comprises two-grain grain boundaries between two main phase grains and triangular grain boundaries consisting of no less than three main phase grain gaps; wherein M comprises Cu, Ga, and/or Al, and R is at least one rare earth element comprising Nd.

According to an embodiment of the present disclosure, R comprises Nd, and also comprises at least one rare earth element selected from the following: Y, La, Ce, Pr, Pm, Sm, Eu, Gd, Tb, Dy, Ho, Er, Tm, Yb, Lu, and Sc.

According to an embodiment of the present disclosure, the main phase grains of the magnet have a mean grain size of 1.8-8 µm, preferably 2.5-6 µm. Within the grain size range, the magnet can achieve relatively good magnetic performance. If the grain size is smaller than 1.8 µm, the surface activity of the grains is greater, making them more likely to adsorb impurity elements such as O/N, etc.; moreover, these adsorbed impurity elements are difficult to remove, leading to a decrease in performance. If the grain size is larger than 8 µm, there will be more structural defects inside the main phase grains, and the grain boundary phase is relatively rare, making it difficult to obtain high-performance neodymium-iron-boron magnets.

According to an embodiment of the present disclosure, the atomic concentration of Cu in adjacent main phase grains is set to [Cu₁], and the atomic concentration of Cu in the two-grain grain boundaries is set to [Cu₂]; the concentrations satisfy the relation: 1 ≤ [Cu₂]/[Cu₁] < 2.

According to an embodiment of the present disclosure, the triangular grain boundaries in the magnet comprise Cu-rich regions, and the atomic concentration of Cu in the triangular grain boundaries is set to [Cu₃], which satisfies the relation: [Cu₃]/[Cu₁] ≥ 2; a grain boundary phase of the Cu-rich regions is a non-magnetic phase, and a relatively high content of Cu-rich regions in the magnet can significantly reduce the Br of the magnet. In the triangular grain boundaries of the present disclosure, regions in which the concentrations of the element Cu satisfy [Cu₃]/[Cu₁] ≥ 2 are defined as Cu-rich regions.

According to an embodiment of the present disclosure, the area of the Cu-rich regions of the triangular grain boundaries accounts for <5% of the total area of the grain boundary phase.

According to an embodiment of the present disclosure, the atomic concentration of Ga in adjacent main phase grains is set to [Ga₁], and the atomic concentration of Ga in the two-grain grain boundaries is set to [Ga₂]; the concentrations satisfy the relation: 1 ≤ [Ga₂]/[Ga₁] < 2.

According to an embodiment of the present disclosure, the triangular grain boundaries in the magnet comprise Ga-rich regions, and the atomic concentration of Ga in the triangular grain boundaries is set to [Ga₃], which satisfies the relation: [Ga₃]/[Ga₁] ≥ 2; that is, in the triangular grain boundaries, regions in which the concentrations of the element Ga satisfy [Ga₃]/[Ga₁] ≥ 2 are defined as Ga-rich regions, and a grain boundary phase of the Ga-rich regions is a non-ferromagnetic phase; preferably, the area of the Ga-rich regions in the triangular grain boundaries accounts for <5% of the total area of the grain boundary phase.

According to an embodiment of the present disclosure, the atomic concentration of Al in adjacent main phase grains is set to [Al₁], and the atomic concentration of Al in the two-grain grain boundaries is set to [Al₂]; the concentrations satisfy the relation: 1< [Al₂]/[Al₁] < 2.

According to an embodiment of the present disclosure, the triangular grain boundaries in the magnet comprise Al-rich regions, and the atomic concentration of Al in the triangular grain boundaries is set to [Al₃], which satisfies the relation:[Al₃]/[Al₁] ≥ 2; that is, in the triangular grain boundaries, regions in which the concentrations of the element Ga satisfy [Al₃]/[Al₁] ≥ 2 are defined as Al-rich regions, and a grain boundary phase of the Al-rich regions is a non-magnetic phase; preferably, the area of the Al-rich regions in the triangular grain boundaries accounts for <5% of the total area of the grain boundary phase.

In the present disclosure, the adjacent main phase grains refer to main phase grains adjacent to the two-grain grain boundaries.

In the traditional manufacturing process of magnets, Cu atoms rarely enter the main phase grains; they are mainly present in Nd-rich phases in the grain boundaries, achieving the effect of enhancing Hcj and improving irreversibility; however, when the Cu content is too high, it can also lead to a decrease in Br and Hcj performance. A small number of Al atoms occupy the 8j₂ crystal sites in the main phase grains, leading to grain refinement. Most Al atoms reduce the block-like distribution of Nd-rich and B-rich phases in the grain boundaries, improving the wetting angle with the main phase and making Nd-rich phases more uniformly distributed along the boundaries. A small number of Ga atoms are present in the main phase grains. Ga atoms are mainly enriched in the grain boundaries, achieving the effect of refining grains and improving the wettability of the grain surfaces. However, as the compounds they form are non-ferromagnetic phases, the addition of elements such as Cu/Ga/Al, etc. inevitably reduces Br. Furthermore, these stable compounds are enriched in the surface layers of the grains, inhibiting the substitution reactions of heavy rare earth elements such as Dy/Tb, etc. with the grain surface component structures during the diffusion process. This directly results in a significant reduction in the diffusion Hcj increase.

According to an embodiment of the present disclosure, [Cu₂]/[Cu₁] is greater than or equal to 1 and is less than 2, more preferably 1.2-1.8. Within the atomic concentration ratio range, Cu atoms are relatively uniformly distributed in the surface layers of the main phase grains and in the two-grain grain boundaries and so are Ga and Al atoms.

According to an embodiment of the present disclosure, the high-performance neodymium-iron-boron magnet also comprises transition metal elements such as Mn, Si, Zr, Ti, Nb, etc., and the transition metal elements are mainly enriched in the grain boundary phase; when the transition metal elements are distributed in the magnet similarly to Cu, Ga, and Al, that is, 1 ≤ [Zr₂]/[Zr₁] < 2, and/or 1 ≤ [Ti₂]/[Ti₁] < 2, and/or 1 ≤ [Nb₂]/[Nb₁] < 2, a high-performance magnet can be obtained. [Zr₁] represents the atomic concentration of Zr in adjacent main phase grains, and [Zr₂] represents the atomic concentration of Zr in the two-grain grain boundaries; [Ti₁] represents the atomic concentration of Ti in adjacent main phase grains, and [Ti₂] represents the atomic concentration of Ti in the two-grain grain boundaries; [Nb₁] represents the atomic concentration of Nb in adjacent main phase grains, and [Nb₂] represents the atomic concentration of Nb in the two-grain grain boundaries. According to an embodiment of the present disclosure, the high-performance neodymium-iron-boron magnet described above comprises, on a 100% mass ratio basis, the following components:
27-35% R, wherein R is at least 1 rare earth element comprising Nd;
0.8-1.2 wt% B;
0-3.0 wt% Co;
0.1-0.6 wt% Cu;
0.1-0.8 wt% Ga;
0-1.0 wt% Al; and
60-72 wt% T, wherein T comprises Fe and other transition metal elements, as well as inevitable impurity elements, the transition metal elements having the meanings described above.

According to an embodiment of the present disclosure, R comprises Nd, and also comprises at least one rare earth element selected from the following: Y, La, Ce, Pr, Pm, Sm, Eu, Gd, Tb, Dy, Ho, Er, Tm, Yb, Lu, and Sc. Preferably, the R is at least one of Nd, Y, Dy, Tb, Ho, La, and Ce; wherein the total mass of Dy, and/or Tb, and/or Ho accounts for ≤5 wt% of the total mass of the magnet; the total mass of La, and/or Ce, and/or Y accounts for ≤3 wt% of the total mass of the magnet. When the R content in the magnet is too high, there are more Nd-rich phases, leading to a reduction in Br; when the R content is too low, no uniform and continuous Nd-rich phase can form in the magnet to magnetically isolate the main phase grains, and the Hcj and squareness of the magnet will sharply deteriorate. As the magnetic polarization intensity of the main phase grains of the R₂(Fe,M)₁₄B system, composed of rare earth elements such as Pr, Dy, Tb, Ho, etc., is lower than that of Nd, the anisotropic field is better than that of Nd. This results in a significant reduction in the Br of the magnet and an increase in Hcj. To improve the Hcj of the magnet while ensuring the magnet has a high Br, a small amount of heavy rare earth elements such as Dy, Tb, Ho, etc. can be used, with their content ≤ 5 wt% of the magnet components combined. Rare earth elements such as La, Ce, Y, etc., the intrinsic magnetic performance of which is significantly lower than that of Nd, are abundant and inexpensive. These elements can also be added in small quantities, with their content ≤ 3 wt% of the magnet components combined. Preferably, R comprises Nd and Pr. According to an embodiment of the present disclosure, the B content is 0.8-1.2 wt%, further preferably 0.87-1.05 wt%, and still further preferably 0.93-1.00 wt%. When the B content is too low, the R content is relatively high, and the proportion of R-rich phases that form is relatively high; the volume ratio of the main phase grains is small, causing the magnet to have a relatively low Br and easily making the Hcj and squareness of the magnet unstable. When the B content is too high, the volume proportion of B-rich phases is significantly increased, causing a great reduction in magnetic performance.

According to an embodiment of the present disclosure, Co occupies the position of Fe in the main phase grains of the magnet. As the atomic magnetic moment of Co is smaller than that of Fe, adding Co reduces the Br of the magnet. Meanwhile, the addition of Co has a significant effect on the corrosion resistance and temperature resistance of the magnet. Therefore, the Co content is 0-3.0 wt%, further preferably 0.5-2 wt%. When the Co content is 0, the corrosion resistance and temperature resistance deteriorate significantly. However, when the Co content is greater than 3 wt%, the Br decreases significantly, and even the Hcj also deteriorates significantly. High Co content also increases the brittleness of the magnet, making it prone to chipping during processing, which lowers the product yield. In addition,

Co is a strategic metal, and its extensive use demands a stable supply of starting materials.

According to an embodiment of the present disclosure, the Cu content is 0.1-0.6 wt%, further preferably 0.2-0.5 wt%. When the Cu content is too high, the grain growth is inhibited, the grain boundary phase is increased, the volume ratio of the main phase grains is decreased, and the Br of the magnet is reduced; and when the Cu content is too low or even no Cu is contained, the main phase grains and the B-rich phases of the magnet are relatively coarse, so the magnetic performance of the magnet is significantly reduced.

According to an embodiment of the present disclosure, the Ga content is 0.1-0.8 wt%, further preferably 0.2-0.6 wt%. When the Ga content is too high, the grain growth is inhibited, the grain boundary phase is increased, the volume ratio of the main phase grains is decreased, and the Br of the magnet is reduced; and when the Ga content is too low or even no Ga is contained, the main phase grains and the B-rich phases of the magnet are relatively coarse, so the magnetic performance of the magnet is significantly reduced.

According to an embodiment of the present disclosure, the Al content is 0-1.0 wt%, further preferably 0.1-0.5 wt%. When the Al content is too high, the grain growth is inhibited, the grain boundary phase is increased, the volume ratio of the main phase grains is decreased, and the Br of the magnet is reduced; and when the magnet comprises no Al, the main phase grains and the B-rich phases of the magnet are relatively coarse, so the magnetic performance of the magnet is significantly reduced.

According to an embodiment of the present disclosure, T comprises Fe and other transition metal elements, as well as inevitable impurity elements. Examples of other transition metal elements are Mn, Si, Zr, Ti, Nb, etc. Examples of inevitable impurity elements are C, S, O, N, etc. Preferably, T comprises Fe and/or Ti.

The present disclosure also provides a preparation method for the neodymium-iron-boron magnet described above, the method comprising:
(a) a smelting procedure: subjecting the components of the magnet described above to melting, casting, and cooling to form alloy sheets;
(b) a powder preparation procedure: crushing the alloy sheets into an alloy powder;
(c) a press molding procedure: press-molding the alloy powder under the action of a magnetic field to obtain a compact; and
(d) a sintering procedure: subjecting the compact to a sintering treatment and an aging treatment to prepare and obtain the neodymium-iron-boron magnet.

According to an embodiment of the present disclosure, the smelting procedure of step (a) is a conventional technique in the prior art; for example, strip casting is used to prepare the alloy sheets; illustratively, the step (a) is specifically a smelting procedure: according to the proportions of target components, fully melting the components of the magnet described above into alloy molten steel in a medium-frequency induction smelting furnace under vacuum or in an inert gas atmosphere, and then rapidly cooling the alloy molten steel to form alloy sheets or an alloy ingot casting. Illustratively, the alloy molten steel is subjected to secondary cooling.

According to an embodiment of the present disclosure, the step (b) is specifically a powder preparation procedure comprising coarse crushing and fine crushing; preferably the coarse crushing is selected from hydrogen embrittlement and/or medium milling.

Preferably, the fine crushing is selected from jet milling. Preferably, the jet milling is performed in an inert gas atmosphere. Preferably, the inert gas is selected from nitrogen gas, helium gas, and the like.

In the present disclosure, the hydrogen embrittlement, medium milling, or jet milling may be performed by using procedures known in the prior art.

According to an embodiment of the present disclosure, in step (b), after fine crushing, screening, e.g., grading wheel screening, is needed to obtain the alloy powder. Illustratively, the alloy powder has an SMD granularity of 1.8-8 µm, preferably 2.5-6 µm, and X90/X10 ≤ 4.5. SMD stands for surface mean diameter. The smaller the SMD, the smaller the granularity of powder particles. The larger the SMD, the larger the granularity of powder particles. X90 represents the particle size value corresponding to a 90% cumulative distribution, meaning that the particle size of all particles is not greater than this particle size: the number of particles whose particle size is greater than this particle size value is 0. X10 represents the particle size value corresponding to a 10% cumulative distribution, meaning that the particle size of all particles is not greater than this particle size: the number of particles whose particle size is greater than this particle size value is 0. X90/X10 indicates the granularity distribution of the powder; the smaller the X90/X10, the more concentrated the granularity distribution of the powder.

According to an embodiment of the present disclosure, in step (b), a lubricant needs to be added during fine crushing; preferably, the lubricant is added both before and after jet milling. Adding the lubricant before jet milling can enhance the flowability of the powder; adding the lubricant during jet milling can improve the flowability and uniformity of the powder; adding the lubricant after jet milling can also improve the uniformity and flowability of the powder, facilitating uniform powder filling and pressing.

Preferably, the lubricant is selected from reagents known in the prior art and used in such an amount known in the prior art group that the powder can be homogeneously mixed and easily molded. Illustratively, the lubricant is selected from volatile organic solvents such as lipids, alcohols, etc., for example, zinc stearate. Illustratively, the amount of the lubricant added is 0.1-1 wt% of the total mass of the starting materials for the preparation.

Preferably, after the lubricant is added, blending is needed. Preferably, the blending time is 1-6 h.

The blending described in the present disclosure may be performed by a method known in the prior art, e.g., by placing the materials in a blending machine.

According to an embodiment of the present disclosure, in step (c), the press molding is performed in a press grinder cavity.

According to an embodiment of the present disclosure, in step (c), before press molding, orientation magnetization and molding need to be performed under a magnetic field strength of no less than 2T; coil magnetization or pulse magnetization may be used.

According to an embodiment of the present disclosure, in step (c), after press molding, a reversed magnetic field is applied for demagnetization.

According to an embodiment of the present disclosure, in step (c), the molded compact may also be treated in a cold isostatic press to further increase the density of the compact.

According to an embodiment of the present disclosure, in step (d), before the sintering treatment, the compact is subjected to a heating treatment at a temperature of 100-950 °C, preferably 150-900 °C, with an incubation time of 60-120 min for the heating treatment; illustratively, the heating treatment temperature has 3-6 stages; the incubation temperature of each stage of the heating treatment may be the same or different, and the incubation time may be the same or different; the heating treatment stages may be performed under an inert gas or vacuum. Illustratively, the temperature of the heat treatment has 4 stages, which are 100-200 °C, 200-550 °C, 550-700 °C, and 700-950 °C.

According to an embodiment of the present disclosure, in step (d), the sintering treatment has no less than three, illustratively 3-10, e.g., 3, 4, 5, 6, 7, 8, 9, or 10, sintering-incubation stages and heating stages before sintering incubation, wherein temperatures in the sintering-incubation stages are 950-1200 °C, preferably 980-1070 °C, and the incubation time of each stage is 20-120 min; the incubation temperature of each stage of the sintering treatment may be the same or different, and the incubation time may be the same or different; the sintering-incubation stages may be performed under an inert gas or vacuum. Illustratively, the heating rate in each stage of the sintering treatment is 0.5-5 °C/min, more preferably 1-4 °C/min; the heating rate of each heating stage may be the same or different.

According to an embodiment of the present disclosure, between every two adjacent sintering-incubation processes, the previous sintering-incubation stage may be immediately followed by the next heating-incubation procedure, or after the previous sintering-incubation stage, cooling may be performed before the next heating-incubation procedure, wherein the temperature of the cooling is not limited, so long as the temperature is lower than the temperature of the previous sintering-incubation stage; the number of stages of the cooling is not particularly limited, so long as the desired cooling temperature is achieved; that is, between every two adjacent sintering-incubation processes, the processes may be random. For example, after the previous sintering-incubation stage, 1-10 stages of cooling are performed before the next heating-incubation procedure, wherein the temperatures of the 1-10 stages of cooling may be the same or different.

To ensure the production efficiency, the sintering-incubation stages are preferably controlled within 10 sets.

In the present disclosure, the sintering-incubation procedure of no less than three stages described above can be used to achieve the uniform distribution of elements such as Cu, Ga, Al, etc., and this sintering mode favors the segregation of elements such as Cu, Ga, Al, etc. from the grain boundary phase to the main phase grains.

According to an embodiment of the present disclosure, in step (d), the aging treatment is performed after sintering treatment cooling. Illustratively, the aging treatment comprises: after sintering is complete, cooling to room temperature, and then performing a heating treatment.

Preferably, the aging treatment is selected from a one-stage aging treatment or a two-stage aging treatment.

Preferably, conditions for the one-stage aging treatment are: an aging treatment temperature of 500-700 °C and an incubation time of 240-420 min. Preferably, the two-stage aging treatment comprises: heating to perform a primary aging treatment at a temperature of 800-950 °C, with an incubation time of 180-300 min; cooling to no more than 200 °C, and then heating to perform a secondary aging treatment at a temperature between 450 °C and 600 °C, with an incubation time of 240-360 min.

According to an embodiment of the present disclosure, after the sintering procedure, a diffusion treatment may also be performed.

Preferably, the diffusion treatment comprises applying a diffusion material to the surface of the magnet, and performing a vacuum heating diffusion treatment, diffusion cooling, and a diffusion aging treatment. preferably, the diffusion material is selected from at least one of pure metals of Dy and/or Tb, hydrides of Dy and/or Tb, oxides of Dy and/or Tb, hydroxides of Dy and/or Tb, fluorides of Dy and/or Tb, etc., illustratively, the Dy metal.

Preferably, the diffusion treatment may be performed by using vacuum evaporation, magnetron sputtering, coating, burying, or the like.

Preferably, the vacuum heating diffusion treatment is performed at a temperature of 850-950 °C for a time period of 10-30 h.

Preferably, the diffusion cooling is performed at a temperature below 100 °C.

Preferably, the diffusion aging treatment is performed at a temperature of 450-600 °C for a time period of 4-8 h.

According to an embodiment of the present disclosure, after the sintering procedure and before the diffusion treatment, the compact may be processed to target dimensions.

According to an embodiment of the present disclosure, after the sintering procedure and before the diffusion treatment, after the compact is processed to the target dimensions, the surface of the magnet is cleaned to eliminate processing scraps, processing cutting fluid residues, or processing glue on the surface of the magnet.

According to an embodiment of the present disclosure, the cleaning treatment before diffusion may use, without limitation, ultrasonic cleaning with purified water, acid cleaning, etc., and acids that can be used are, without limitation, nitric acid, sulfuric acid, citric acid, etc.

The present disclosure also provides use of the neodymium-iron-boron magnet described above for motors.

The present disclosure also provides a motor, wherein the motor comprises the magnet described above.

The present disclosure also provides use of the motor described above, wherein preferably, the motor may be used for new-energy vehicles and energy-saving household appliances.

Advantageous Effects of Present Disclosure:
The present disclosure achieves relatively high Br and Hcj in magnets by regulating the component proportions and distribution of elements such as Cu, Ga, Al, etc. in the magnets and the grain size. The sintering treatment mode provided by the present disclosure, i.e., the no less than three sintering-incubation stages and heating stages before incubation, can inhibit the abnormal growth of the main phase grains while ensuring that the main phase grains and the grain boundary phase are fully sintered and the density is improved, and prevent the deflection of grains with ordered orientation during sintering, thereby ensuring the degree of orientation of the magnet and significantly improving the Br of the magnet.

Within the atomic concentration ratio ranges for Cu, Ga, and Al in the present application (i.e., 1 ≤ [Cu₂]/[Cu₁] < 2, 1 ≤ [Ga₂]/[Ga₁] < 2, and 1 < [Al₂]/[Al₁] < 2), the R₂(Fe,M)₁₄B structure forms within the main phase grains; meanwhile, the levels of M enrichment in the two-grain grain boundaries in contact with the main phase grains are relatively low. This allows for achieving relatively high Hcj while still maintaining relatively high remanence. Furthermore, after diffusion treatment, the Hcj is significantly improved. Diffusing Tb can increase Hcj by ≥880 kA/m, and diffusing Dy can increase Hcj by ≥480 kA/m.

### BRIEF DESCRIPTION OF THE DRAWINGS

FIG. 1 is a schematic of Cu distribution in a magnet in Example 1.
FIG. 2 is a schematic of Cu distribution in a magnet in Comparative Example 1.

### DETAILED DESCRIPTION

The technical solutions of the present disclosure will be further described in detail with reference to the following specific examples. It should be understood that the following examples are merely exemplary illustration and explanation of the present disclosure and should not be construed as limiting the protection scope of the present disclosure. All techniques implemented based on the contents described above of the present disclosure are encompassed within the protection scope of the present disclosure.

Unless otherwise stated, the starting materials and reagents used in the following examples are all commercially available products or can be prepared by using known methods.

### Examples 1-2

A preparation method for a neodymium-iron-boron magnet, the method comprising the following steps:
(a) According to the target components of the magnet in Table 1 below, starting materials were prepared and melted using a vacuum induction smelting furnace in an Ar atmosphere. The molten liquid was cast onto a quenching roller at a rotation speed of 33 rpm at a casting temperature of 1420 °C (i.e., the strip casting process) to prepare and obtain neodymium-iron-boron alloy sheets, with the mean thickness of the target alloy sheets being 0.22 mm.

**Table 1. The target components (mass percentages) of the example magnets**

| **No.** | **Pr** | **Nd** | **B** | **Co** | **Cu** | **Ga** | **Al** | **Ti** | **Fe and impurity elements** |
|---|---|---|---|---|---|---|---|---|---|
| **Example 1** | **-** | **31** | **0.98** | **1** | **0.3** | **0.2** | **0.3** | **0.2** | **Balance** |
| **Example 2** | **6** | **25** | **0.97** | **1** | **0.2** | **0.4** | **0.5** | **0** | **Balance** |

(b) The alloy sheets described above were subjected to a coarse crushing treatment by using the hydrogen embrittlement process to obtain a powder. Zinc stearate was added to the powder as a lubricant in an amount of 0.1 wt% of the mass of the starting materials, and the mixture was blended for 60 min. The blended materials were subjected to a fine crushing treatment in a fluidized bed-type jet mill by using nitrogen gas as the grinding gas and adjusting equipment parameters such as the rotation speed of a grading wheel, the grinding pressure, and the like, to obtain a jet-milled powder (i.e., an alloy powder) with a target granularity SMD of 2.5 µm and an X90/X10 of 4.2.
(c) Zinc stearate was added to the prepared jet-milled powder with the target granularity as a lubricant in an amount of 0.2 wt% of the mass of the starting materials, and the mixture was blended for 120 min. After thorough blending, the mixture was pressed into a compact under a magnetizing field strength of 2 T. The compact was then subjected to an isostatic pressing treatment in an isostatic press at 180 MPa for 15 s to increase the compactness of the compact, resulting in a compact with a density of 4.3 g/cm³.
(d) The compact was placed in a sintering furnace and treated with heat under vacuum. The compact was incubated at 150 °C for 100 min and 260 °C for 100 min to remove the lubricant and degassed by incubation at 600 °C for 90 min and 900 °C for 90 min. The 3-stage sintering-incubation process shown in Table 2 below was then performed. After the third sintering-incubation stage, the product was directly cooled to room temperature to obtain a sintered body. The specific 3-stage heating-incubation sintering process is shown in Table 2 below, and each sintering-incubation stage was followed immediately by heating for the next heating procedure.

**Table 2. Parameters for the 3-stage heating-incubation sintering process for the example magnets**

| | **First heating rate (°C/min)** | **First incubation temperatur e (°C)** | **First incubatio n time (min)** | **Second heating rate (°C/min)** | **Second incubation temperatur e (°C)** | **Second incubatio n time (min)** | **Third heating rate (°C/min)** | **Third incubation temperatur e (°C)** | **Third incubatio n time (min)** |
|---|---|---|---|---|---|---|---|---|---|
| **Exampl e 1** | **3** | **980** | **60** | **2** | **1050** | **40** | **1** | **1070** | **40** |
| **Exampl e2** | **3** | **980** | **60** | **2** | **1040** | **40** | **1** | **1060** | **40** |

(e) Two-stage aging treatment: The sintered body described above was heated to 900 °C and incubated for 180 min, cooled to 200 °C, heated again to 530 °C and incubated for 240 min, and cooled to room temperature to obtain a post-aging treatment magnet.
(f) The post-aging treatment magnet was processed into a standard φ10-10 sample column, and the performance of the magnet was tested using a BH instrument. The specific magnetic performance test results are shown in Table 3.

**Table 3. Magnetic performance test data for the example magnets**

| | Br(T) | Hcj(kA/m) | Hk(kA/m) | Hk/Hcj |
|---|---|---|---|---|
| Exemple 1 | 1.354 | 1543 | 1521 | 0.986 |
| Exemple 2 | 1.362 | 1473 | 1460 | 0.991 |

The vertically oriented surfaces of the magnets prepared in Examples 1-2 were polished, and the magnet grain size was determined using a scanning electron microscope (SEM). The mean grain size within a 2000× field of view was defined by analysis using Image-Pro Plus software. The grain size of the largest grain within the field of view was defined as the maximum grain size. The number of grains in the 2000× field of view was counted. The unit grain area was calculated by dividing the visual field area by the number of grains, and the grain size was calculated using the formula for the area of a circle as the mean grain size. The grain with the largest area within the field of view was selected, and its grain size was calculated using the formula for the area of a circle as the maximum grain size. The test results are shown in Table 4.

A field-emission electron probe microanalyzer (FE-EPMA) (JEOL, 8530F) was used to analyze and determine the distribution of components within the magnet. Line scans across the main phase grains, two-grain grain boundaries, and triangular grain boundaries were performed to determine and analyze the different distribution concentrations of elements such as Cu, Ga, Al, etc. in the regions described above. The atomic concentrations of Cu, Ga, and Al inside the main phase grains 0.5 µm from the two-grain grain boundaries were defined as [Cu₁], [Ga₁], and [Al₁], respectively. The atomic concentrations of Cu, Ga, and Al at the center of the two-grain grain boundary between two main phase grains were defined as [Cu₂], [Ga₂], and [Al₂], respectively. The mean of the ratios of 5 sets of adjacent main phase grains and two-grain grain boundaries within the field of view was taken to define [Cu₂]/[Cu₁]. The ratio of the two concentrations was used to determine whether the element Cu was relatively uniformly distributed in the main phase grains and two-grain grain boundaries. In the triangular grain boundaries, regions in which the concentrations of the element Cu satisfy [Cu₃]/[Cu₁] ≥ 2 were defined as Cu-rich regions. Analysis was performed using Image-Pro Plus software, and the ratio of the area of Cu-rich regions to the total area of the grain boundary phase was calculated. The relative distribution of Ga and Al and the area ratios of enrichment regions were determined using the same test analysis method.

The distribution and structural characteristics of Cu, Ga, and Al, as tested using the analysis methods described above, are shown in Table 4 below.

**Table 4. Grain size and element distribution data for the example magnets**

| | **Mean grain size (µm)** | **Maximu m grain size (µm)** | **[Cu₁]/[Cu₂]** | **[Ga₁]/[Ga₂]** | **[Al₁]/[Al₂]** | **Area ratio of Cu-rich regions** | **Area ratio of Ga-rich regions** | **Area ratio of Al-rich regions** |
|---|---|---|---|---|---|---|---|---|
| **Example 1** | **4.5** | **7.2** | **1.3** | **1.4** | **1.4** | **1.2%** | **0.9%** | **1.1%** |
| **Example 2** | **4.6** | **6.8** | **1.4** | **1.6** | **1.7** | **1.0%** | **1.3%** | **1.5%** |

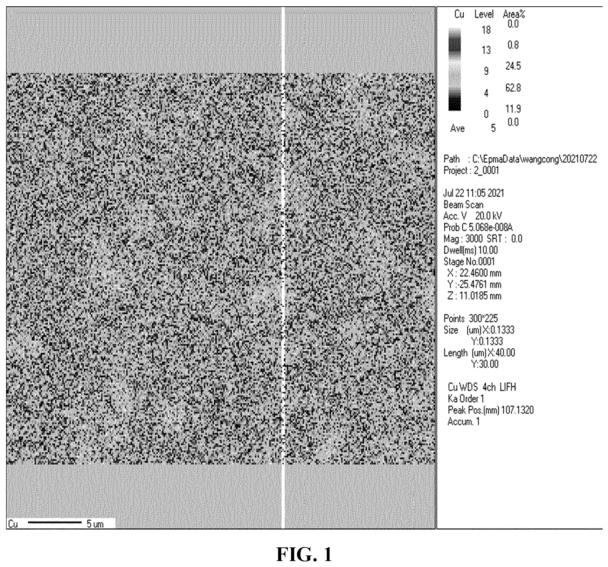

FIG. 1 is a schematic of the distribution of Cu in the magnet of Example 1. It can be seen from FIG. 1 that Cu was relatively uniformly distributed in the surface layers of the main phase grains and in the two-grain grain boundaries. Although there were Cu-rich regions in the triangular grain boundaries, the area ratio of Cu-rich regions was relatively small, and the levels of Cu enrichment in the triangular grain boundaries were also relatively low.

### Comparative Examples 1-2

(a) According to the target components of the magnet in Table 5 below, starting materials were prepared, and neodymium-iron-boron alloy sheets were prepared and obtained using the strip casting process, with the mean thickness of the target alloy sheets being 0.22 mm.

**Table 5. The target components (mass percentages) of the comparative example magnets**

| **No.** | **Pr** | **Nd** | **B** | **Co** | **Cu** | **Ga** | **Al** | **Ti** | **Fe and impurity elements** |
|---|---|---|---|---|---|---|---|---|---|
| **Comparative Example 1** | **-** | **31** | **0.98** | **1** | **0.7** | **0.2** | **0.3** | **0.2** | **Balance** |
| **Comparative Example 2** | **-** | **31** | **0.98** | **1** | **0.3** | **0** | **0** | **0** | **Balance** |

The alloy sheets were crushed into a powder using the process of Examples 1-2. The alloy powder was press-molded and subjected to a sintering treatment using the 3-stage heating-incubation sintering process shown in Table 6 below, and each sintering-incubation stage was followed immediately by heating for the next heating procedure. After the third incubation stage, the product was cooled to room temperature to prepare and obtain a sintered body.

Two-stage aging treatment: The sintered body described above was heated to 900 °C and incubated for 180 min, cooled to 200 °C, heated again to 530 °C and incubated for 240 min, and cooled to room temperature to obtain a post-aging treatment magnet.

**Table 6. Parameters for the 3-stage heating-incubation sintering process for the comparative magnets**

| | **First heating rate (°C/min)** | **First incubation temperature (°C)** | **First incubation time (min)** | **Second heating rate (°C/min)** | **Second incubation temperature (°C)** | **Second incubation time (min)** | **Third heating rate (°C/min)** | **Third incubation temperature (°C)** | **Third incubation time (min)** |
|---|---|---|---|---|---|---|---|---|---|
| **Comparative Example 1** | **3** | **980** | **60** | **2** | **1050** | **40** | **1** | **1070** | **40** |
| **Comparative Example 2** | **3** | **980** | **60** | **2** | **1020** | **40** | **1** | **1050** | **40** |

The magnetic performance was tested according to the magnetic performance test method described above, and the test results are shown in Table 7. The magnet grain size test and element distribution method test described above were followed, and the results are shown in Table 8.

**Table 7. Magnetic performance test data for the comparative example magnets**

| | **Br (T)** | **Hcj (kA/m)** | **Hk (kA/m)** | **Hk/Hcj** |
|---|---|---|---|---|
| **Comparative Example 1** | **1.293** | **1320** | **1229** | **0.931** |
| **Comparative Example 2** | **1.41** | **1135** | **1069** | **0.942** |

**Table 8. Grain size and element distribution data for the comparative example magnets**

| | **Mean grain size (µm)** | **Maximum grain size (µm)** | **[Cu₁]/[Cu₂]** | **[Ga₁]/[Ga₂]** | **[Al₁]/[Al₂]** | **Area ratio of Cu-rich regions** | **Area ratio of Ga-rich regions** | **Area ratio of Al-rich regions** |
|---|---|---|---|---|---|---|---|---|
| **Comparative Example 1** | **4.4** | **6.9** | **1.8** | **1.3** | **1.3** | **6.3%** | **1.4%** | **1.7%** |
| **Comparative Example 2** | **4.8** | **8.2** | **1.4** | **--** | **--** | **1.3%** | **-** | **-** |

| | | | | | | | | |
|---|---|---|---|---|---|---|---|---|
| *Since the designed components of the magnet of Comparative Example 2 do not include Ga and Al, "--" means that no comparison of component concentrations was performed. | | | | | | | | |

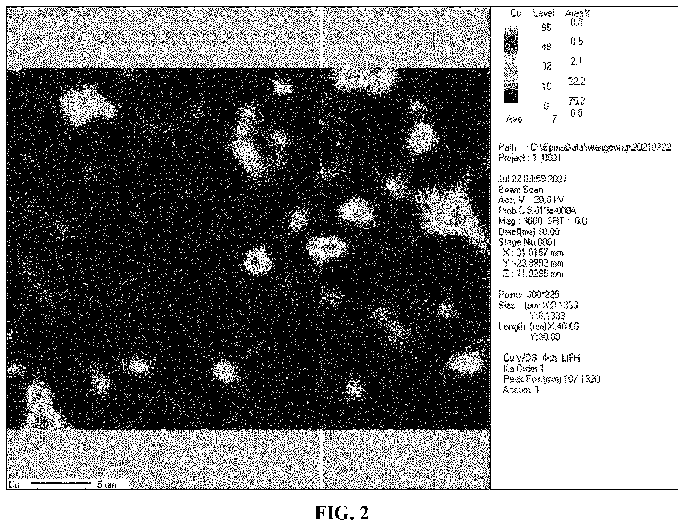

FIG. 2 is a schematic of the distribution of Cu in the magnet of Comparative Example 1, and it can be seen from FIG. 2 that although the levels of Cu enrichment in the surface layers of the main phase grains and in the two-grain grain boundaries were relatively low, the relative concentration at the two-grain grain boundaries was still relatively high compared to FIG. 1, and there were significantly more Cu-rich regions in the triangular grain boundaries; the area ratio was relatively high, meaning that Cu was highly enriched in the triangular grain boundaries.

According to comparisons between Examples 1-2 and Comparative Examples 1-2, although the Br of Comparative Example 2 showed some improvement compared to the Br of Examples 1-2, the coercivity Hcj was greatly reduced, and the squareness was greatly reduced. When each component element of the magnet was within the range of the present disclosure, the overall performance of Br and Hcj was better, and the magnet had excellent squareness Hk/Hcj, which can ensure the magnet's stable magnetic field output.

### Example 3

Example 3 differs from Example 1 in that: in step (d), a sintering treatment was performed using the 3-stage heating-incubation sintering process shown in Table 9 below, and after each sintering-incubation stage, the temperature was lowered to 900 °C before the heating of the next stage.

**Table 9. Parameters for the 3-stage heating-incubation sintering process for the example magnets**

| | **First heating rate (°C/min)** | **First incubation temperature (°C)** | **First incubation time (min)** | **Second heating rate (°C/min)** | **Second incubation temperature (°C)** | **Second incubation time (min)** | **Third heating rate (°C/min)** | **Third incubation temperature (°C)** | **Third incubation time (min)** |
|---|---|---|---|---|---|---|---|---|---|
| **Example 3** | **2.5** | **1070** | **40** | **2.5** | **1070** | **40** | **2.5** | **1070** | **40** |

### Comparative Example 3

Comparative Example 3 differs from Example 1 in that: in step (d), a sintering treatment was performed using the 2-stage heating-incubation sintering process shown in Table 10 below, and after 1 incubation stage, the temperature was lowered to 400 °C before the heating of the second stage.

**Table 10. Parameters for the 2-stage heating-incubation sintering process for the magnet of Comparative Example 3**

| | **First heating rate (°C/min)** | **First incubation temperature (°C)** | **First incubation time (min)** | **Second heating rate (°C/min)** | **Second incubation temperature (°C)** | **Second incubation time (min)** |
|---|---|---|---|---|---|---|
| **Comparative Example 3** | **3** | **1040** | **270** | **2.5** | **1070** | **240** |

The magnets prepared in Example 3 and Comparative Example 3 were subjected to magnetic performance testing and magnet grain size and element distribution analysis. The magnetic performance test results are shown in Table 11, and the grain size and element distribution are shown in Table 12.

**Table 11. Magnetic performance test data for the magnets of Example 3 and Comparative Example 3**

| | **Br** | **Hcj** | **Hk** | **Hk/Hcj** |
|---|---|---|---|---|
| | **T** | **kA/m** | **kA/m** | |
| **Example 3** | **1.367** | **1612** | **1602** | **0.994** |
| **Comparative Example 3** | **1.348** | **1435** | **1380** | **0.962** |

**Table 12. Grain size and element distribution data for the magnets of Example 3 and Comparative Example 3**

| | **Mean grain size (µm)** | **Maximum grain size (µm)** | **[Cu₁]/[Cu₂]** | **[Ga₁]/[Ga₂]** | **[Al₁]/[Al₂]** | **Area ratio of Cu-rich regions** | **Area ratio of Ga-rich regions** | **Area ratio of Al-rich regions** |
|---|---|---|---|---|---|---|---|---|
| **Example 3** | **4.5** | **6.8** | **1.4** | **1.2** | **1.5** | **1.1%** | **0.8%** | **1.4%** |
| **Comparative Example 3** | **6.2** | **12.4** | **3.2** | **1.8** | **2.8** | **8.6%** | **4.3%** | **7.6%** |

According to a comparison of Example 3 and Comparative Example 3, the heating-incubation sintering process of the present disclosure offers a shorter period and more excellent magnetic performance than the traditional 2-stage sintering process. The method of the present disclosure effectively inhibits abnormal grain growth in the magnet, achieves a uniform distribution of the elements Cu, Ga, and Al in the main phase grains and the two-grain grain boundaries, and reduces their enrichment in the triangular grain boundaries.

In Example 3, compared to Example 1, a step of cooling to no more than 900 °C after each incubation stage before the heating of the next stage is added after each heating-incubation step; the use of the three-stage heating cooling interval sintering process further effectively inhibited abnormal grain growth in the magnet and also led to some improvement in the performance of the magnet.

### Example 4

The magnet after sintering and aging in Example 3 was processed into a sheet product measuring 20 mm in length, 20 mm in width, and 5 mm in thickness. A metal Dy membrane was applied to the surface of the magnet using the dipping process, followed by 15 h of incubation at 900 °C for diffusion treatment. After the diffusion temperature was cooled to below 100 °C, the temperature was again raised to 500 °C for an aging treatment for 5 h. The final magnet was subjected to magnetic performance testing, and the test results are shown in Table 13 below.

### Comparative Example 4

The magnet after sintering and aging in Comparative Example 3 was processed into a sheet product measuring 20 mm in length, 20 mm in width, and 5 mm in thickness using the diffusion treatment process of Example 4. A metal Dy membrane was applied to the surface of the magnet using the dipping process, followed by 15 h of incubation at 900 °C for diffusion treatment. After the diffusion temperature was cooled to below 100 °C, the temperature was again raised to 500 °C for an aging treatment for 5 h. The final magnet was subjected to magnetic performance testing, and the test results are shown in Table 13 below.

**Table 13. Post-diffusion magnetic performance results for Example 4 and Comparative Example 4**

| | **Br** | **△Br** | **Hcj** | **△Hcj** |
|---|---|---|---|---|
| | **T** | **T** | **kA/m** | **kA/m** |
| **Example 4** | **1.345** | **-0.022** | **2196** | **584** |
| **Comparative Example 4** | **1.323** | **-0.025** | **1928** | **493** |

In Table 13, ΔBr and ΔHcj refer to the Br increase and Hcj increase of Example 4 relative to Example 3, and the Br increase and Hcj increase of Comparative Example 4 relative to Comparative Example 3, respectively.

According to a comparison of the results of Example 4 and Comparative Example 4, the magnet prepared using the same diffusion process and the method of the present disclosure exhibited better diffusion Hcj increase, the performance of the final magnet was better, and its structure was more suitable for diffusion.

The above examples illustrate the embodiments of the present disclosure. However, the protection scope of the present disclosure is limited by the appended claims.

## Claims

1. A high-performance neodymium-iron-boron magnet, wherein the neodymium-iron-boron magnet comprises main phase grains having an R₂(Fe,M)₁₄B structure and comprises a grain boundary phase;
the grain boundary phase comprises two-grain grain boundaries between two main phase grains and triangular grain boundaries consisting of no less than three main phase grain gaps; wherein M comprises Cu, Ga, and Al, and R is at least one rare earth element comprising Nd;
wherein on a 100% mass ratio basis, the neodymium-iron-boron magnet comprises the following components:
27-35% R;
0.8-1.2 wt% B;
0-3.0 wt% Co;
0.1-0.6 wt% Cu;
0.1-0.8 wt% Ga;
0.1-1.0 wt% Al; and
60-72 wt% T, wherein T comprises Fe and other transition metal elements, as well as inevitable impurity elements, the transition metal elements comprising at least one of Mn, Si, Zr, Ti, and Nb, **characterized in that**,
the main phase grains of the neodymium-iron-boron magnet have a mean grain size of 1.8-8 µm;
the atomic concentration of Cu in adjacent main phase grains is set to [Cu₁], the atomic concentration of Cu in the two-grain grain boundaries is set to [Cu₂], and the concentrations satisfy the relation: 1 ≤ [Cu₂]/[Cu₁] < 2;
the atomic concentration of Ga in adjacent main phase grains is set to [Ga₁], the atomic concentration of Ga in the two-grain grain boundaries is set to [Ga₂], and the concentrations satisfy the relation: 1 ≤ [Ga₂]/[Ga₁] < 2;
the atomic concentration of Al in adjacent main phase grains is set to [Al₁], and the atomic concentration of Al in the two-grain grain boundaries is set to [Al₂]; the concentrations satisfy the relation: 1< [Al₂]/[Al₁] < 2; and
the adjacent main phase grains refer to main phase grains adjacent to the two-grain grain boundaries.

2. The neodymium-iron-boron magnet according to claim 1, wherein the main phase grains of the neodymium-iron-boron magnet have a mean grain size of 2.5-6 µm;
the triangular grain boundaries in the neodymium-iron-boron magnet comprise Cu-rich regions the atomic concentration of Cu in the triangular grain boundaries is set to [Cu₃], which satisfies the relation: [Cu₃]/[Cu₁] ≥ 2;
the triangular grain boundaries in the neodymium-iron-boron magnet comprise Ga-rich regions, and the atomic concentration of Ga in the triangular grain boundaries is set to [Ga₃], which satisfies the relation: [Ga₃]/[Ga₁] ≥ 2; and
the triangular grain boundaries in the neodymium-iron-boron magnet comprise Al-rich regions, and the atomic concentration of Al in the triangular grain boundaries is set to [Al₃], which satisfies the relation: [Al₃]/[Al₁] ≥ 2.

3. The neodymium-iron-boron magnet according to claim 1, wherein:
the area of the Cu-rich regions of the triangular grain boundaries accounts for <5% of the total area of the grain boundary phase.

4. The neodymium-iron-boron magnet according to claim 1, wherein, a grain boundary phase of the Ga-rich regions is a non-ferromagnetic phase, and the area of the Ga-rich regions in the triangular grain boundaries accounts for <5% of the total area of the grain boundary phase;
the area of the Al-rich regions of the triangular grain boundaries accounts for <5% of the total area of the grain boundary phase.

5. A preparation method for the neodymium-iron-boron magnet according to any one of claims 1-4, wherein the preparation method comprises:
(a) a smelting procedure: subj ecting the components of the neodymium-iron-boron magnet to melting, casting, and cooling to form alloy sheets;
(b) a powder preparation procedure: crushing the alloy sheets into an alloy powder;
(c) a press molding procedure: press-molding the alloy powder under the action of a magnetic field to obtain a compact; and
(d) a sintering procedure: subjecting the compact to a sintering treatment and an aging treatment to prepare and obtain the neodymium-iron-boron magnet.

6. The preparation method according to claim 5, wherein in step (b), the alloy powder has an SMD granularity of 1.8-8 µm and X90/X10 ≤ 4.5;
in step (d), the sintering treatment has no less than three sintering-incubation stages and heating stages before sintering incubation, wherein temperatures in the sintering-incubation stages are 950-1200 °C.

7. The preparation method according to claim 6, wherein in step (b), the alloy powder has an SMD granularity of 2.5-6 µm;
in step (d), the sintering treatment has 3-10 sintering-incubation stages and heating stages before sintering incubation, wherein temperatures in the sintering-incubation stages are 980-1070 °C, and an incubation time of each stage is 20-120 min;
a heating rate in each stage of the sintering treatment is 1-4 °C/min;
between every two adjacent sintering-incubation processes, the previous sintering-incubation stage is immediately followed by the next heating-incubation procedure, or after the previous sintering-incubation stage, cooling is performed before the next heating-incubation procedure.

8. The preparation method according to claim 6, wherein the aging treatment is selected from a one-stage aging treatment or a two-stage aging treatment, wherein:
conditions for the one-stage aging treatment are: an aging treatment temperature of 500-700 °C and an incubation time of 240-420 min;
the two-stage aging treatment comprises: heating to perform a primary aging treatment at a temperature of 800-950 °C, with an incubation time of 180-300 min; cooling to no more than 200 °C, and then heating to perform a secondary aging treatment at a temperature between 450 °C and 600 °C, with an incubation time of 240-360 min;
optionally, after the sintering procedure, a diffusion treatment is performed;
the diffusion treatment comprises applying a diffusion material to the surface of the magnet, and
performing a vacuum heating diffusion treatment, diffusion cooling, and a diffusion aging treatment; and
the diffusion material is selected from at least one of pure metals of Dy and Tb, hydrides of Dy and Tb, oxides of Dy and Tb, hydroxides of Dy and Tb, and fluorides of Dy and Tb.

9. A motor comprising the neodymium-iron-boron magnet according to any one of claims 1-4.

## Patentansprüche

1. Hochleistungsfähiger Neodym-Eisen-Bor-Magnet, wobei der Neodym-Eisen-Bor-Magnet Hauptphasenkörner mit einer R2(Fe,M)14B-Struktur umfasst und eine Korngrenzenphase umfasst; wobei die Korngrenzenphase Zweikorn-Korngrenzen zwischen zwei Hauptphasenkörnern und dreieckige Korngrenzen umfasst, die aus nicht weniger als drei Hauptphasenkornlücken bestehen; wobei M Cu, Ga und Al umfasst und R mindestens ein Seltenerdelement, das Nd umfasst, ist;
wobei der Neodym-Eisen-Bor-Magnet, bei einem Massenverhältnis von 100 %, die folgenden Komponenten umfasst:
27-35 % R;
0,8-1,2 Gew.-% B;
0-3,0 Gew.-% Co;
0,1-0,6 Gew.-% Cu;
0,1-0,8 Gew.-% Ga;
0,1-1,0 Gew.-% Al; und
60-72 Gew.-% T, wobei T Fe und andere Übergangsmetallelemente sowie unvermeidliche Verunreinigungselemente umfasst, wobei die Übergangsmetallelemente mindestens eines von Mn, Si, Zr, Ti und Nb umfassen,
**dadurch gekennzeichnet, dass**
die Hauptphasenkörner des Neodym-Eisen-Bor-Magneten eine mittlere Korngröße von 1,8-8 µm aufweisen;
die Atomkonzentration von Cu in benachbarten Hauptphasenkörnern auf [Cu1] eingestellt ist, die Atomkonzentration von Cu in den Zweikorn-Korngrenzen auf [Cu2] eingestellt ist, und die Konzentrationen die Beziehung: 1 ≤ [Cu₂]/[Cu₁] < 2 erfüllen;
die Atomkonzentration von Ga in benachbarten Hauptphasenkörnern auf [Ga1] eingestellt ist, die Atomkonzentration von Ga in den Zweikorn-Korngrenzen auf [Ga2] eingestellt ist, und die Konzentrationen die Beziehung: 1 ≤ [Ga2]/[Ga1] < 2 erfüllen;
die Atomkonzentration von Al in benachbarten Hauptphasenkörnern auf [Al1] eingestellt ist und die Atomkonzentration von Al in den Zweikorn-Korngrenzen auf [Al2] eingestellt ist; wobei die Konzentrationen die Beziehung: 1 < [Al2]/[Al1] < 2 erfüllen; und
sich die benachbarten Hauptphasenkörner auf Hauptphasenkörner beziehen, die den Zweikorn-Korngrenzen benachbart sind.

2. Neodym-Eisen-Bor-Magnet nach Anspruch 1, wobei die Hauptphasenkörner des Neodym-Eisen-Bor-Magneten eine mittlere Korngröße von 2,5-6 µm aufweisen;
wobei die dreieckigen Korngrenzen in dem Neodym-Eisen-Bor-Magneten Cu-reiche Bereiche umfassen, die Atomkonzentration von Cu in den dreieckigen Korngrenzen auf [Cu3] eingestellt ist, was die Beziehung [Cu₃]/[Cu₁] ≥ 2 erfüllt;
wobei die dreieckigen Korngrenzen in dem Neodym-Eisen-Bor-Magneten Ga-reiche Bereiche umfassen und die Atomkonzentration von Ga in den dreieckigen Korngrenzen auf [Ga3] eingestellt ist, was die Beziehung [Ga₃]/[Ga₁] ≥ 2 erfüllt; und
wobei die dreieckigen Korngrenzen in dem Neodym-Eisen-Bor-Magneten Al-reiche Bereiche umfassen und die Atomkonzentration von Al in den dreieckigen Korngrenzen auf [Al3] eingestellt ist, was die Beziehung [Al3]/[Al1] ≥ 2 erfüllt.

3. Neodym-Eisen-Bor-Magnet nach Anspruch 1, wobei:
die Fläche der Cu-reichen Bereiche der dreieckigen Korngrenzen < 5 % der Gesamtfläche der Korngrenzenphase ausmacht.

4. Neodym-Eisen-Bor-Magnet nach Anspruch 1, wobei eine Korngrenzenphase der Ga-reichen Bereiche eine nicht-ferromagnetische Phase ist und die Fläche der Ga-reichen Bereiche in den dreieckigen Korngrenzen < 5 % der Gesamtfläche der Korngrenzenphase ausmacht;
wobei die Fläche der Al-reichen Bereiche der dreieckigen Korngrenzen < 5 % der Gesamtfläche der Korngrenzenphase ausmacht.

5. Herstellungsverfahren für den Neodym-Eisen-Bor-Magneten nach einem der Ansprüche 1 bis 4, wobei das Herstellungsverfahren Folgendes umfasst:
(a) eine Schmelzprozedur: Unterziehen der Komponenten des Neodym-Eisen-Bor-Magneten einem Schmelzen, Gießen und Abkühlen, um Legierungsbleche zu bilden;
(b) eine Pulverherstellungsprozedur: Zerkleinern der Legierungsbleche zu einem Legierungspulver;
(c) eine Pressformprozedur: Pressformen des Legierungspulvers unter der Einwirkung eines Magnetfelds, um einen Pressling zu erhalten; und
(d) eine Sinterprozedur: Unterziehen des Presslings einer Sinterbehandlung und einer Alterungsbehandlung, um den Neodym-Eisen-Bor-Magneten herzustellen und zu erhalten.

6. Herstellungsverfahren nach Anspruch 5, wobei in Schritt (b) das Legierungspulver eine SMD-Granularität von 1,8-8 µm und X90/X10 ≤ 4,5 aufweist;
wobei in Schritt (d) die Sinterbehandlung nicht weniger als drei Sinter-Inkubationsstufen und Erwärmungsstufen vor der Sinterinkubation aufweist, wobei die Temperaturen in den Sinter-Inkubationsstufen 950-1200 °C betragen.

7. Herstellungsverfahren nach Anspruch 6, wobei in Schritt (b) das Legierungspulver eine SMD-Granularität von 2,5-6 µm aufweist;
wobei in Schritt (d) die Sinterbehandlung 3-10 Sinter-Inkubationsstufen und Erwärmungsstufen vor der Sinterinkubation aufweist, wobei die Temperaturen in den Sinter-Inkubationsstufen 980-1070 °C betragen und eine Inkubationszeit jeder Stufe 20-120 Minuten beträgt;
wobei die Erwärmungsrate in jeder Stufe der Sinterbehandlung 1-4 °C/min beträgt;
wobei zwischen jeden zwei benachbarten Sinter-Inkubationsprozessen die vorherige Sinter-Inkubationsstufe unmittelbar von der nächsten Erwärmungs-Inkubationsprozedur gefolgt wird oder nach der vorherigen Sinter-Inkubationsphase ein Abkühlen vor der nächsten Erwärmungs-Inkubationsprozedur durchgeführt wird.

8. Herstellungsverfahren nach Anspruch 6, wobei die Alterungsbehandlung aus einer einstufigen Alterungsbehandlung oder einer zweistufigen Alterungsbehandlung ausgewählt wird, wobei:
die Bedingungen für die einstufige Alterungsbehandlung sind: eine Alterungsbehandlungstemperatur von 500-700 °C und eine Inkubationszeit von 240-420 Minuten;
die zweistufige Alterungsbehandlung umfasst: Erwärmen, um eine primäre Alterungsbehandlung bei einer Temperatur von 800-950 °C mit einer Inkubationszeit von 180-300 Minuten durchzuführen; Abkühlen auf nicht mehr als 200 °C und dann Erwärmen, um eine sekundäre Alterungsbehandlung bei einer Temperatur zwischen 450 °C und 600 °C mit einer Inkubationszeit von 240-360 Minuten durchzuführen;
optional nach der Sinterprozedur eine Diffusionsbehandlung durchgeführt wird;
die Diffusionsbehandlung Aufbringen eines Diffusionsmaterials auf die Oberfläche des Magneten und Durchführen einer Vakuumerwärmungsdiffusionsbehandlung, eines Diffusionskühlens und einer Diffusionsalterungsbehandlung umfasst; und
das Diffusionsmaterial ausgewählt wird aus mindestens einem der reinen Metalle von Dy und Tb, Hydriden von Dy und Tb, Oxiden von Dy und Tb, Hydroxiden von Dy und Tb und Fluoriden von Dy und Tb.

9. Motor, umfassend den Neodym-Eisen-Bor-Magneten nach einem der Ansprüche 1 bis 4.

## Revendications

1. Aimant en néodyme-fer-bore haute performance, dans lequel l'aimant en néodyme-fer-bore comprend des grains de phase principale ayant une structure R2(Fe,M)14B et comprend une phase intergranulaire ; la phase intergranulaire comprend des joints de grains à deux grains entre deux grains de phase principale et des joints de grains triangulaires constitués de pas moins de trois espaces des grains de phase principale ; dans lequel M comprend Cu, Ga et Al, et R est au moins un élément des terres rares comprenant Nd ;
dans lequel, sur la base d'un rapport massique de 100 %, l'aimant en néodyme-fer-bore comprend les composants suivants :
27-35 % de R ;
0,8-1,2 % en poids de B ;
0-3,0 % en poids de Co ;
0,1-0,6 % en poids de Cu ;
0,1-0,8 % en poids de Ga ;
0,1-1,0 % en poids d'Al ; et
60-72 % en poids de T, dans lequel T comprend du Fe et d'autres éléments de métaux de transition, ainsi que des éléments d'impuretés inévitables, les éléments de métaux de transition comprenant au moins l'un parmi Mn, Si, Zr, Ti et Nb,
**caractérisé en ce que**,
les grains de phase principale de l'aimant en néodyme-fer-bore ont une granulométrie moyenne de 1,8-8 µm ;
la concentration atomique de Cu dans les grains de phase principale adjacents est fixée à [Cu1], la concentration atomique de Cu dans les joints de grains à deux grains est fixée à [Cu2], et les concentrations satisfont la relation : 1 ≤ [Cu2]/[Cu1] < 2 ;
la concentration atomique de Ga dans les grains de phase principale adjacents est fixée à [Ga1], la concentration atomique de Ga dans les joints de grains à deux grains est fixée à [Ga2], et les concentrations satisfont la relation : 1 ≤ [Ga2]/[Ga1] < 2 ;
la concentration atomique d'Al dans les grains de phase principale adjacents est fixée à [Al1], la concentration atomique d'Al dans les joints de grains à deux grains est fixée à [Al2] ; les concentrations satisfont la relation : 1< [Al2]/[Al1] < 2 ; et
les grains de phase principale adjacents font référence aux grains de phase principale adjacents aux joints de grains à deux grains.

2. Aimant en néodyme-fer-bore selon la revendication **1,** dans lequel les grains de phase principale de l'aimant en néodyme-fer-bore ont une granulométrie moyenne de 2,5-6 µm ;
les joints de grains triangulaires dans l'aimant en néodyme-fer-bore comprennent des régions riches en Cu, la concentration atomique de Cu dans les joints de grains triangulaires est fixée à [Cu3], qui satisfait la relation : [Cu3]/[Cu1] ≥ 2 ;
les joints de grains triangulaires dans l'aimant en néodyme-fer-bore comprennent des régions riches en Ga, et la concentration atomique de Ga dans les joints de grains triangulaires est fixée à [Ga3], qui satisfait la relation : [Ga3]/[Ga1] ≥ 2 ; et
les joints de grains triangulaires dans l'aimant en néodyme-fer-bore comprennent des régions riches en Al, et la concentration atomique d'Al dans les joints de grains triangulaires est fixée à [Al3], qui satisfait la relation : [Al3]/[Al1] ≥ 2.

3. Aimant en néodyme-fer-bore selon la revendication 1, dans lequel :
l'aire des régions riches en Cu des joints de grains triangulaires représente < 5 % de l'aire totale de la phase intergranulaire.

4. Aimant en néodyme-fer-bore selon la revendication 1, dans lequel une phase intergranulaire des régions riches en Ga est une phase non ferromagnétique, et l'aire des régions riches en Ga dans les joints de grains triangulaires représente < 5 % de l'aire totale de la phase intergranulaire ;
l'aire des régions riches en Al des joints de grains triangulaires représente < 5 % de l'aire totale de la phase de joint de grain.

5. Procédé de préparation du aimant en néodyme-fer-bore selon l'une quelconque des revendications 1 à 4, dans lequel le procédé de préparation comprend :
(a) une procédure de fusion : soumission des composants de l'aimant en néodyme-fer-bore à une fusion, une coulée et un refroidissement pour former des feuilles d'alliage ;
(b) une procédure de préparation de poudre : broyage des feuilles d'alliage en poudre d'alliage ;
(c) une procédure de moulage par compression : moulage par compression de la poudre d'alliage sous l'action d'un champ magnétique pour obtenir un comprimé ; et
(d) une procédure de frittage : soumission du comprimé à un traitement de frittage et à un traitement de vieillissement pour préparer et obtenir l'aimant en néodyme-fer-bore.

6. Procédé de préparation selon la revendication 5, dans lequel à l'étape (b), la poudre d'alliage a une granularité de diamètre moyen en surface (SMD) de 1,8-8 µm et X90/X10 ≤ 4,5 ;
à l'étape (d), le traitement de frittage ne comporte pas moins de trois stades de frittage-incubation et stades de chauffage avant frittage-incubation, dans lequel les températures des stades de frittage-incubation sont de 950-1200 °C.

7. Procédé de préparation selon la revendication 6, dans lequel à l'étape (b), la poudre d'alliage a une granularité de diamètre moyen en surface (SMD) de 2,5-6 µm ;
à l'étape (d), le traitement de frittage comporte 3-10 stades de frittage-incubation et stades de chauffage avant frittage-incubation, dans lequel les températures des stades de frittage-incubation sont de 980-1070 °C, et le temps d'incubation de chaque stade est de 20-120 min ; une vitesse de chauffage à chaque stade du traitement de frittage est de 1-4 °C/min ;
entre tous les processus adjacents de frittage-incubation, le stade de frittage-incubation précédent est immédiatement suivi de la procédure de chauffage-incubation suivante, ou après le stade de frittage-incubation précédent, un refroidissement est réalisé avant la procédure de chauffage-incubation suivante.

8. Procédé de préparation selon la revendication 6, dans lequel le traitement de vieillissement est choisi parmi un traitement de vieillissement à un stade ou un traitement de vieillissement à deux stades, dans lequel :
les conditions du traitement de vieillissement à un stade sont : une température de traitement de vieillissement de 500-700 °C et un temps d'incubation de 240-420 min ;
le traitement de vieillissement à deux stades comprend : un chauffage pour réaliser un traitement de vieillissement primaire à une température de 800-950 °C, avec un temps d'incubation de 180-300 min ; un refroidissement jusqu'à une température ne dépassant pas 200 °C, puis un chauffage pour réaliser un traitement de vieillissement secondaire à une température entre 450 °C et 600 °C, avec un temps d'incubation de 240-360 min ;
facultativement, après la procédure de frittage, un traitement de diffusion est réalisé ;
le traitement de diffusion comprend l'application d'un matériau de diffusion à la surface de l'aimant, et la réalisation d'un traitement de diffusion par chauffage sous vide, d'un refroidissement par diffusion et d'un traitement de vieillissement par diffusion ; et
le matériau de diffusion est choisi à partir d'au moins l'un parmi métaux purs de Dy et Tb, hydrures de Dy et Tb, oxydes de Dy et Tb, hydroxydes de Dy et Tb et fluorures de Dy et Tb.

9. Moteur comprenant l'aimant en néodyme-fer-bore selon l'une quelconque des revendications 1 à 4.
